# EUROPEAN PATENT APPLICATION

(11) **EP 4 202 495 A1**
(43) Date of publication of application: **28.06.2023**
(21) Application number: 21216528.6
(22) Date of filing: 21.12.2021
(51) Int. Cl.: G01S 17/86, G01S 17/931, B60Q 1/00

(54) **AUTOMOTIVE LIGHTING DEVICE AND AUTOMOTIVE VEHICLE**

(71) Applicant: Valeo Vision, 93012 Bobigny Cedex (FR)
(72) Inventor: MIMOUN, Mickael, 93012 BOBIGNY (FR); RENAUD, Pierre, 93012 BOBIGNY (FR); PLANCHE, Gregory, 93012 BOBIGNY (FR); EL IDRISSI, Hafid, 93012 BOBIGNY (FR)
(74) Representative: Valeo Visibility

(57) **Abstract**

The present invention refers to an automotive lighting device comprising a plurality of solid-state light sources (2) configured to emit light in an emission direction, a plurality of optical elements (8) configured to project the emitted light outside the luminous device, a plurality of luminous sensors (4), each luminous sensor being configured to acquire a portion of a reflection of the projected light; and processing means (3) configured to control the operation of the light sources and to receive data from the luminous sensors (4).

## Description

This invention is related to the field of automotive luminous devices, and more particularly, to the ones used to detect objects surrounding the vehicle.

Driving assistance comprises the use of sensors to inform the driver (or to directly inform the vehicle) of objects surrounding the vehicle. This is extremely useful for autonomous driving, but also to help a potential driver to avoid obstacles on the road, in the case of low visibility conditions (due to weather conditions, deficient lighting surrounding the vehicles or the vehicle going reverse, for example).

To achieve this goal, sensors play a crucial role, since they receive the information from the exterior of the vehicle, containing the data that will be interpreted in order to create a map of the surrounding objects.

There are many different sensors which are intended to accomplish this mission. Most of them use ultrasound, with acoustic pulses. Cameras are also adapted to acquire infrared or visible ambient light.

In some cases, where the sensing area is too wide, the acquiring devices may also be affected by other types of light, such as firemen or policemen, sunlight..., which may distort the use of this light for detection purposes.

The present invention provides an alternative solution for the problem of by means of an automotive lighting device which comprises
- at least one light source configured to emit light;
- at least one optical element configured to project the emitted light outside the lighting device according to a projection direction;
- at least one luminous sensor configured to acquire a portion of a reflection of the projected light; and
- processing means configured to control the operation of the light sources and to receive data from the luminous sensors
- wherein the luminous sensor is configured to capture light only in a field of view which is limited vertically to -10° and +10° with respect to the horizontal plane containing the projection direction.

This lighting device uses the light pattern emitted by the light sources which are in charge of the driving lighting or signalling functions in order to obtain information about the surrounding objects. There is therefore no need to use an additional light source, or ultrasound devices. The same device which may be used for lighting functions (such as a Low Beam LB, a High Beam HB, a Daytime Running Light DRL, a Position Light PL, a Stop Light, a Reverse Light, a Corner Light CL, or a Turn Indicator TI) may also be used for objects detecting. Further, limitation in the vertical field of view aims to avoid light which is higher than the horizon, such as the sunlight, but also lights which are usually higher than the vehicle's roof, such as emergency lights from the police or firemen. In this sense, the horizontal plane is the plane of the ground, where the vehicle stands in, while the vertical direction is perpendicular to this horizontal plane. In any case, the skilled person, once the lighting device is installed in the vehicle (and even before it) perfectly knows which is the horizontal direction and the vertical direction. The limitation is therefore carried out by two horizontal planes, one at +10° from the horizon (the horizontal plane which contains the projection direction) and another one at -10° from the horizon.

In some particular embodiments, the light sources are solid-state light sources.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In some particular embodiments, the optical element comprises an outer lens or reflector cavities or a light guide.

In these cases, all these optical elements are suitable for the present invention.

In some particular embodiments, the light sources are configured to cooperate to provide a daytime running lamp function.

This function uses a white light that is suitable to be reflected and detected by the luminous sensors.

In some particular embodiments, the field of view is limited by a reception optical arrangement located in front of the luminous sensor.

The luminous sensor may comprise a reception optical arrangement, which is configured to prepare the light received by the luminous sensor. In this case, the reception optical arrangement is further configured to limit the field of view of the luminous sensor.

In some particular embodiments, the reception optical arrangement comprises a reception lens and the luminous sensor is located in the focal plane of the reception lens.

This arrangement is optimal for the optical adaptation of the light received by the luminous sensor.

In some particular embodiments, the field of view is limited by an opaque object.

An opaque object which is outside the luminous sensor is suitable for a mechanic and effective limitation of the vertical field of view of the luminous sensor.

In some particular embodiments, the opaque object is a folder or a gasket or a frame.

A folder is an element which is commonly used to limit the light pattern of the low beam, so their shapes and behaviours have been thoroughly tested. A gasket may be also used to provide watertightness to the sensor, and a frame can be easily customized to provide the best limitation to the field of view of the luminous sensor.

In some particular embodiments, the solid-state light sources comprise light emitting diodes or laser diodes.

These types of light sources are widely used in automotive vehicles for driving lighting and signalling. With the present invention, the same light sources may also be used for objects detection.

In a second inventive aspect, the invention provides an automotive vehicle comprising an automotive lighting device according to the first inventive aspect.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

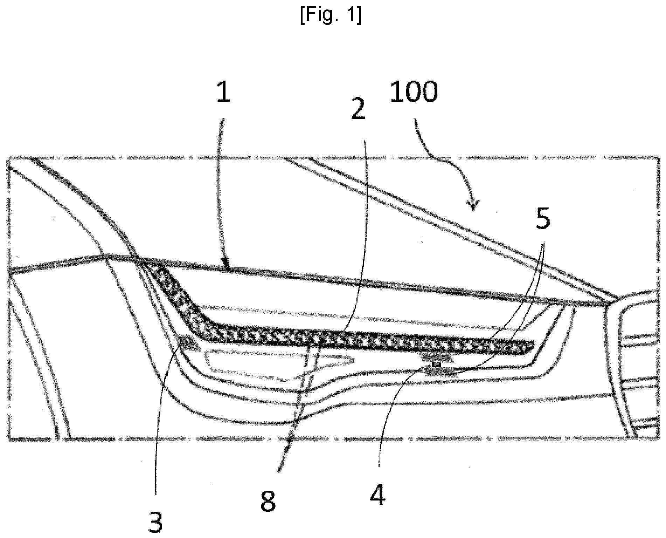

[Fig. 1] shows a general perspective view of some elements of an automotive lighting device according to the invention.

In this figure, the following reference numbers are used for each of the following elements:
- 1: Headlamp
- 2: LEDs
- 3: Processing unit
- 4: Photodiode
- 5: Folder
- 8: Reflector cavity
- 100: Automotive vehicle

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

Figure 1 shows an automotive lighting device according to the invention installed in an automotive vehicle.

In this figure, the following elements are seen
- a plurality of light-emitting diodes (LED) 2 which are arranged along an array of light sources
- a plurality of reflector cavities 8, each one configured to project the emitted light of one LED 2 outside the lighting device in a projection direction
- a photodiode 4 configured to acquire the light of the LEDs 2; and
- a processing unit 3 configured to control the operation of the light sources and to receive data from the photodiode 4.

The photodiode comprises a pair of folders 5 which are intended to limit the field of view of the photodiode 4 vertically, from -10° with respect to the projection direction to +10° with respect to the projection direction. Thus, undesired light outside this range (sunlight, emergency lights in the roof of other vehicles) is avoided.

The processing unit 3 is configured to receive power from a power source and prepare the frequency and shape of the light to be emitted by each group of LEDs.

In different embodiments, instead of a folder, a gasket or a frame may be used for this purpose. These elements provide a total surrounding of the field of view of the photodiode, so they may be used for a customized limitation of the field of view, both vertically and horizontally.

Further, these elements may provide further watertightness or stiffness to the operation of the photodiode, which may be desirable in some circumstances.

In other embodiments, the field of view may be limited by a reception optical arrangement which is located in front of the luminous sensor. This reception optical arrangement may comprise a lens which modifies the field of view of the luminous sensor, which is located in the focal plane of the lens.

This invention may be used in a matrix configuration such as a high-resolution module, having a resolution greater than 2000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixelated light beam by the matrix arrangement. The control centre is thus able to individually control the light emission of each pixel of the matrix arrangement.

Alternatively to what has been presented above, the matrix arrangement may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

In another variant, the light source may be complex and include both at least one segment of light elements, such as light emitting diodes, and a surface portion of a monolithic light source.

## Claims

1. - Automotive lighting device (1) comprising
- at least one light source (2) configured to emit light;
- at least one optical element (8) configured to project the emitted light outside the lighting device according to a projection direction;
- at least one luminous sensor (4) configured to acquire a portion of a reflection of the projected light; and
- processing means (3) configured to control the operation of the light sources and to receive data from the luminous sensors
- wherein the luminous sensor is configured to capture light only in a field of view which is limited vertically to -10° and +10° with respect to the horizontal plane containing the projection direction.

2. - Automotive lighting device (1) according to claim 1, wherein the optical element (8) comprises an outer lens, or reflector cavities or a light guide.

3. - Automotive lighting device (1) according to any of the preceding claims, wherein the light sources (2) are configured to cooperate to provide a daytime running lamp function.

4. - Automotive lighting device (1) according to any of the preceding claims, wherein the field of view is limited by a reception optical arrangement located in front of the luminous sensor (4).

5. - Automotive lighting device (1) according to claim 4, wherein the reception optical arrangement comprises a reception lens and the luminous sensor is located in the focal plane of the reception lens.

6. - Automotive lighting device (1) according to any of the preceding claims, wherein the field of view is limited by an opaque object (5).

7. - Automotive lighting device (1) according to claim 6, wherein the opaque object (5) is a folder or a gasket or a frame.

8. - Automotive lighting device (1) according to any of the preceding claims, wherein the light sources are solid-state light sources.

9. - Automotive lighting device (1 according to claim 8, wherein the solid-state light sources comprise light emitting diodes or laser diodes.

10. - Automotive vehicle (100) comprising an automotive lighting device (1) according to any of the preceding claims.
